# EUROPEAN PATENT SPECIFICATION

(11) **EP 3 529 384 B1**
(45) Date of publication and mention of the grant of the patent: **29.05.2024**
(21) Application number: 17804011.9
(22) Date of filing: 19.10.2017
(51) Int. Cl.: C21D 1/76, B82Y 30/00, C09D 5/00, C21D 6/00, C21D 1/70, C23C 22/00, C21D 9/67

(54) **SURFACE MODIFICATION OF STAINLESS STEELS**
OBERFLÄCHENMODIFIZIERUNG VON EDELSTÄHLEN
MODIFICATION DE SURFACE D'ACIERS INOXYDABLES

(30) Priority: 19.10.2016 US 201662410182 P
(43) Date of publication of application: 28.08.2019
(73) Proprietor: Cleveland-Cliffs Steel Properties Inc., West Chester, OH 45069 (US)
(72) Inventor: MYERS, Frederick, Alan, Middletown OH 45042 (US); PRICE, LeRoy, Raymond, Reading OH 45215 (US)
(74) Representative: Samson & Partner Patentanwälte mbB
(86) International application number: PCT/US2017/057404
(87) International publication number: WO 2018/075779

(56) References cited:
- WO-A1-96/11290
- JP-A- S60 255 919
- US-A- 3 861 938
- US-A- 5 980 662
- BONNET G ET AL: "The effect of rare earths deposited on steel surfaces, by different processes (sol/gel, electrophoresis, OMCVD), on high temperature corrosion behaviour", CORROSION SCIENCE, OXFORD, GB, vol. 35, no. 5-8, 1 January 1993 (1993-01-01), pages 893-899, XP024047425, ISSN: 0010-938X, DOI: 10.1016/0010-938X(93)90306-2 [retrieved on 1993-01-01]
- BONNET G ET AL: "Characterization of thin solid films of rare earth oxides formed by the metallo-organic chemical vapour deposition technique, for high temperature corrosion applications", THIN SOLID F, ELSEVIER, AMSTERDAM, NL, vol. 261, no. 1-2, 1 June 1995 (1995-06-01), pages 31-36, XP004314158, ISSN: 0040-6090, DOI: 10.1016/S0040-6090(94)06487-3

## Description

### BACKGROUND

Surfaces of stainless steels can be modified using various techniques. For appearance-critical applications such as building panels, roofs or trim, stainless can be colorized using chemical treatments or paint. Stainless steel surfaces can be hardened by nitriding processes involving exposure to gasses, salt baths, or plasmas. Oxidation performance has been reported to be improved by alloying stainless steel with rare earth elements or by using ion implantation or sol-gel type coating techniques. All of these surface modification procedures are time consuming, involve the use of hazardous materials, and/or add substantial cost to the final material.

An alternative surface treatment and subsequent annealing process has been developed that imparts a durable gray, black, or other colored non-metallic appearance to stainless steel alloys. This process also enriches the surface with chromium and nitrogen, thereby altering the surface chemistry. Coils are processed using an open coil annealing cycle where the material is exposed to a hydrogen and/or nitrogen atmosphere for several hours or days at temperatures of about 1000-1800°F (538 - 982°C).

In some embodiments, the stainless steel material is first treated with a suspension containing up to 5% by weight nano- or micro- particles of a rare earth oxide, such os yttrium oxide. An aqueous nitrate rare earth solution can also be utilized. The oxide appears to impart superior corrosion resistance, which can be an important factor in exterior applications.

This new coil annealing process is less expensive than alternative prior art stainless surface treatment processes because entire coils can be treated in a single batch resulting in a relatively low cost per pound of final material. It also provides a "greener" alternative to conventional surface modification processing because chemical use is limited. Open coil annealing is preferred relative to conventional tight coil annealing in that it allows for more uniform exposure of the entire surface of the coiled strip to the treatment atmosphere. US 5 980 662 describes methods for annealing coils of austenitic stainless steels through the use of a batch annealing process involving selecting compositions of austenitic stainless steel alloys having a sufficiently low weight percentage of carbon so that annealing of the austenitic stainless steel occurs without intergranular carbide precipitation at a temperature of less than about 926,67 °C (1700 °F), which is well below the normal annealing temperature for austenitic stainless steels. Bonnet G. et al., Corrosion Science, (1993), 893-899, concerns the effect of rare earths deposited on steel surfaces, by different processes (sol/gel, electrophoresis, OMCVD), on high temperature corrosion behaviour.

### SUMMARY

The novel process involves the continuous surface treatment of stainless steel coils with aqueous suspensions of rare earth oxide nano or micro particles or aqueous rare earth nitrate solutions according to the claims. The surface treatment can be applied by roll coating, spraying or other conventional application techniques. The material is then heated using Open Coil Anneal (OCA) to develop a surface oxide that alters the surface appearance of stainless steel.

The surface treatment promotes a more uniform color to the subsequently developed oxide formed during anneal. It also improves corrosion resistance of the processed stainless steel material. The invention is defined in the appended claims.

### DESCRIPTION OF DRAWINGS

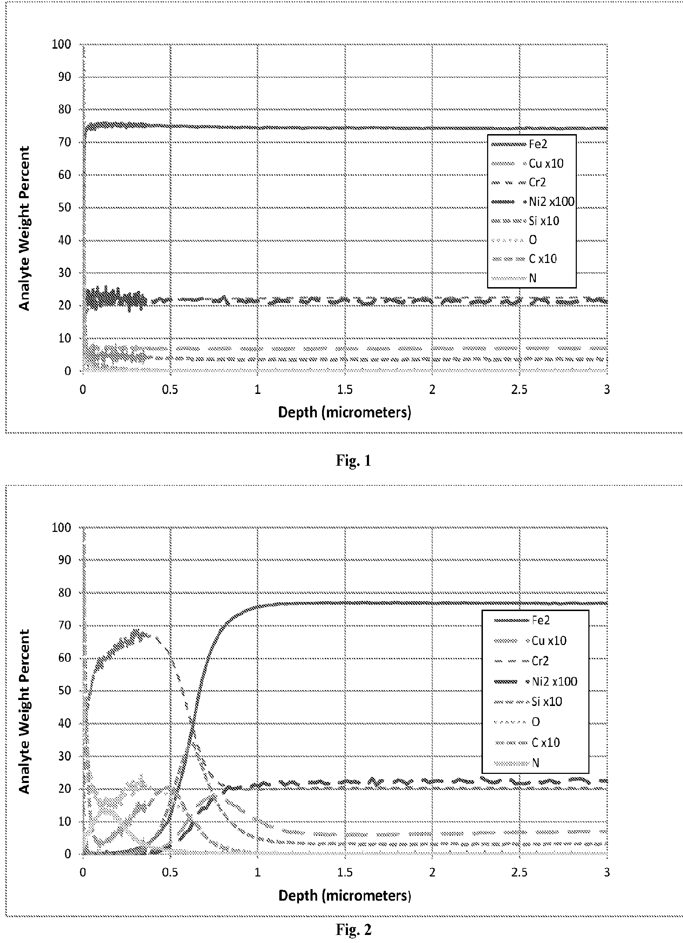

Fig. 1 depicts Glow Discharge Spectroscopy (GDS) analysis of a Chromeshield^{®} 22 stainless steel sample that has not undergone any surface treatment or OCA.
Fig. 2 depicts GDS analysis of a Chromeshield 22 stainless steel sample that has undergone an OCA process.

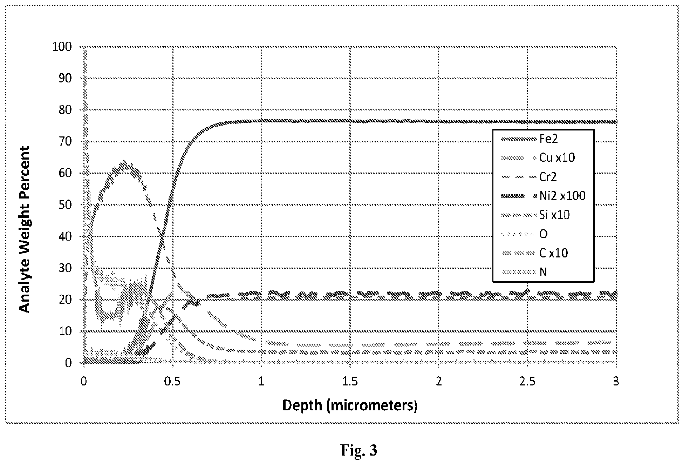

Fig. 3 depicts GDS analysis of a Chromeshield 22 stainless steel sample that has undergone application of a yttria nanoparticle suspension and OCA.

### DETAILED DESCRIPTION

The invention relates to a process for modifying the surface of stainless steel strip comprising the coating of a coil of stainless steel strip having two sides on at least one of said sides aqueous suspensions of rare earth oxides or aqueous rare earth nitrate solutions, such as those containing yttrium, lanthanum, cerium, or zirconium provides a unique surface finish that provides both functional and aesthetic benefits. The process further comprises subjecting said coated coil of stainless steel to an open coil anneal process at a temperature of about 537°C to about 982°C for about 1 hour to greater than 72 hours in one of a reducing or an oxidizing atmosphere and in one of a dry atmosphere with a dew point of-17°C or less or a wet atmosphere with a dew point of 15°C or more. In certain embodiments, the same benefits are obtained with aqueous suspensions of microparticles rather than nanoparticles. "Nanoparticles" are defined as particles with dimensions from 0.1 - 100 nm and "microparticles" are defined as particles with dimensions from 0.1 - 100 gm. "Rare earth" particles include those containing yttrium, lanthanum, cerium, or zirconium. One such suspension is Minimox^{®} yttria nanoparticle suspension, available from Materials Interface, Inc. of Sussex, Wisconsin.

The surface treatment can be applied to a coil of stainless steel by roll coating, spraying or other conventional application techniques. Subsequent drying in the range of 70-300°F (21 - 149°C) is only needed to remove the water component of the suspension or solution. Thus, the drying leaves a residue of the rare earth compound in the range of 300 to 3000 µg/m², or in some embodiments 500-1000 µg/m2. The surface treatment promotes a more uniform color to the subsequently developed oxide formed during anneal. When a nitrate-containing starting material is used as the surface treatment, it is changed to an oxide during the anneal process. The surface treatment, and resulting oxide coating on the stainless steel, also improves corrosion resistance of the processed material.

The coated coil is annealed using an "open coil" process where the coil of steel is loosely wrapped so that the gaseous atmosphere can circulate around each layer (or lap) of the wound steel strip. Annealing times can vary from 30 minutes to 5 days. Surface finishes such as #4 Polish or other finish known in the art may be imparted to the strip prior to OCA.

The stainless steel coils (before or after final anneal, and after coating with the surface treatment suspension or solution) are rewound, for example, with a separating wire between laps and placed in a "box" where they are open coil annealed (OCA) in a desired atmosphere at temperatures from about 1000 to 1800°F. This open coil can be prepared, for example, by inserting a wire or twisted wire, preferably from 0.070 to 0.150 inches (0.18 - 0.38 cm) in diameter, between the windings of the coil providing separation between laps so that the annealing gas transmission through the coil is enhanced. Larger spacing between windings tends to promote a more uniform appearance free of "scallops" or other markings on the surface of the annealed steel. Other methods known to promote gaseous flow around a coated side of each lap of the stainless steel material in a coil can also be used. This process contrasts with the more typically encountered "tight coil" anneal which does not use wire (or other) separators and therefore there is no space between individual coil laps or windings.

The annealing temperatures and atmospheres can vary depending on the use of reducing or oxidizing gases in the annealing furnace. In certain embodiments, an atmosphere of about 30% by weight hydrogen and about 70% by weight nitrogen blend of gases is used. In other embodiments 100% nitrogen, 100% hydrogen or 100% air is used. Other reactive gases such as dissociated ammonium or inert gases such as argon can be used by themselves or can be mixed into the hydrogen and/or nitrogen atmospheres. The atmospheres can be "dry" (with a dew point of approximately 0°F (-17°C) or less, or in some embodiments with a dew point of approximately -40°F (-40°C) or less) or "wet" (with a dew point of +60°F (15°C) or more, or in some embodiments with a dew point +80°F (26.7°C) or more). Dry atmospheres tend to develop duller, darker surfaces than wet atmospheres. Anneal soak times can vary from 1 hour to 72 hours with longer times resulting in darker surfaces. Temperatures can vary from 1000°F (537.7°C) to 1800°F (982°C) depending on the capability of the annealing equipment. Annealing temperature, as well as time, can affect the resulting color of the finished surface treatment.

Stainless steel is generally defined as a steel containing about 10.5% by weight chromium or more. Any ferritic or austenitic stainless steel can be used in the present process. The grade of stainless steel of a particular embodiment (such as Types 436, 409, or 439 stainless steel, or Chromeshield^{®} 22 stainless steel (UNS S44330), which is available commercially from AK Steel Corporation, West Chester, Ohio) influences the colors developed under the same annealing conditions. The finish on the surface of the stainless steel (for example, 2B - temper rolled Ra < 20 µin; 2D - no temper roll Ra < 60 µin; #4 Polish - directional scratch pattern Ra < 45 µin; ESD - shot blasted surface Ra 60-100 µin; or Greystone^{®} finish - roll textured finish Ra 100-200 µin available from AK Steel Corporation, where Ra is the commonly used arithmetic average roughness of a surface (defined in ASME B46.1)) also affects color and gloss of the finished processed material. Less reflective incoming substrates produce typically correspondingly less reflective finishes after open coil annealing.

Therefore, the present processes alter the metallic appearance of stainless steel. Thus, by selecting the grade of stainless steel, its surface finish, and the annealing time and atmosphere, a person of skill in the art using the teachings of the present application can create a surface finish on stainless steel with the desired functional and aesthetic properties. A variety of color and textures can be obtained to provide a stainless steel-based product that is suitable for use as building panels, roofing, automotive exhaust or appliances. Due to the ability to process entire coils the costs are generally lower than existing technologies that are typically limited to processing individual sheets. In addition, the materials needed for the surface modification are more environmentally friendly than those needed to initiate complex chemical surface reactions.

Glow Discharge Spectroscopy (GDS) analysis has indicated that embodiments of the present process result in surface enrichment of chrome and nitrogen relative to the untreated alloy after OCA. There is also an associated reduction in iron at the surface thereby reducing the tendency to form "red" rust. The surface treatment prior to box anneal minimizes spot corrosion and improves the overall uniformity of appearance. The processed surface has a uniform gray/black appearance and the material can be bent greater than 90 degrees without surface damage. It can also survive accelerated corrosion testing that indicates suitability for exterior exposure.

### Example 1

Box anneal testing was conducted using the open coil annealing facility. Various grades of stainless steel were attached to carbon steel coils and annealed using enameling grade steel-type process cycles.

One of the process cycles (the "wet" process) was an open coil anneal process using a 30% by weight/70% by weight hydrogen/nitrogen gas mixture at a dew point of +85°F. The material temperature was 1350°F.

The other cycle process cycle (the "dry" process) was an open coil anneal process using a 30% by weight/70% by weight hydrogen/nitrogen gas mixture at a dew point of -40°F. The material temperature was 1350°F.

The following samples were tested after treating the both surfaces of the stainless steel strip with nanoparticle yttria and heated for 2 hours using the wet process described above:
- 2 - approx 48 x 18 inches of Chromeshield 22 - 2B finish
- 2- approx 48 x 18 inches of Chromeshield 22 - #4 Polish finish
- 2 - approx 33 x 18 inches of 435 - 2B finish
- 2 - approx 30 x 24 inches of 18 CrCb - SB finish (shot blasted)

Corrosion tests (salt fog ASTM B117) and surface analysis were performed. The coated sample showed no pin holes or spot surface corrosion in the first 24 hours, and exhibited a uniform finish.

GDS analysis of the OCA Chromeshield 22 stainless steel material shows enrichment of the surface with chromium vs unannealed material.

### Example 2

Additional production trials were completed using Chromeshield 22 and Type 436L stainless steel coils. A summary of the results is shown below in Table 1 below.

The table lists the grade of stainless (Chromeshield 22, Type 436L), the surface finish on the material (2B, 2D, #4 Polish, Eco Pickled Slurry-EPS) whether the material was treated with a suspension containing rare earth nano yttria particles on one side, the gauge, width and coil weight. The aqueous suspension containing nanoparticle yttrium oxide was applied at a level that resulted in a yttrium level of 300 to 3000 µg/m², or more preferably 500-1000 µg/m². The OCA (Open Coil Anneal) conditions are also provided. Note that all except coil No. 11 were processed using a 30% by weight/70% by weight hydrogen/nitrogen gas mixture. No. 11 was annealed using 100% nitrogen. WET indicates steam was added during anneal (+80°F (26.6°C) dew point). DRY indicates steam was not added (-40°F (-40°C) dew point). Times in the OCA varied from 2 hours to 24 hours. 2X denotes two 2-hour cycles. The material temperature was 1350°F.

The last column lists the overall appearance properties of the materials. The coils with the most uniform and desired surface appearance are highlighted. Several coils had "scallops" on the treated side of the material, but more severe scallops have been seen on the non-treated side of the stainless strip. Scallops are undesirable due to appearance variations. Many of the coils were scallop free.

The color of the treated side of the stainless steel produced during these trials has been measured using an X-Rite Ci7600 spectrometer. A 1.0 inch (25mm) area was tested using a D65-10 light source. Both Specular Included (SCI) and Specular Excluded (SCE) measurements were obtained. The data are presented in CIELAB units of L*, a* and b* where L* is a measure of the lightness and a* and b* the color components green-red and blue-yellow. Note that the use of stainless steel relative to zinc-coated or uncoated carbon steel provides better corrosion resistance due to the presence of chromium in the alloy.

**Architectural Finish Trials - Table 1**

| Coil | Stainless Grade | Finish | Top Side | Gauge (inches) | Width (inches) | Wt (lb) | OCA | Inspection Notes |
|---|---|---|---|---|---|---|---|---|
| 1 | Chromeshield 22 | 2B | Yttria nanoparticles | 0.024 | 48 | 11,040 | Wet (2X) | Dark, uniform |
| 2 | Chromeshield 22 | 2B | Yttria nanoparticles | 0.024 | 48 | 14,920 | Dry (2X) | Scallops on Bottom |
| 3 | Chromeshield 22 | #4 | Yttria nanoparticles | 0.030 | 48 | 31,090 | Dry (2X) | Scallops on Bottom |
| 4 | 436L | 2D | Yttria nanoparticles | 0.048 | 35 | 11,820 | Wet (Std 2 hrs steam) | streaky, blue streaks |
| 5 | 436L | 2D | Yttria nanoparticles | 0.048 | 35 | 14,540 | Wet (8hr steam) | darker but still with blue splotchy streaks |
| 6 | 436L | #4 | Yttria nanoparticles | 0.048 | 35 | 10,840 | Wet (Std 2 hrs steam) | Uniform and gray - |
| 7 | 436L | #4 | Yttria nanoparticles | 0.048 | 35 | 14,730 | Dry plus Wet | Scallops after dry, still present after added wet |
| 8 | 436L | #4 | Yttria nanoparticles | 0.032 | 40.6 | 15,660 | Bottom Position, two coil Charge, 2 hrs wet | Tight wind, at OCA. Scallops, better than top coil. |
| 9 | 436L | #4 | Yttria nanoparticles | 0.032 | 40.6 | 10,750 | Top Position, two coil Charge, 2 hrs wet | Tight wind at OCA. Scallops, worse than bottom. |
| 10 | 436L | #4 | Yttria nanoparticles | 0.048 | 35.11 | 21,100 | Wet (Std 2 hrs steam) | Tight Wind at OCA. Uniform and gray. |
| 11 | 436L | #4 | Yttria nanoparticles | 0.032 | 4064 | 13,300 | Wet - 100% N2 | Tight wind at OCA. Very Heavy scallops - dark purple top portion, silver bottom of coil. |
| 12 | 436L | #4 | Yttria nanoparticles | 0.032 | 40.64 | 10,750 | Wet (Std 2 hrs steam) | Tight Wind at OCA. Uniform and gray. |
| 13 | 436L | EPS | Yttria nanoparticles | 0.0458 | 44.15 | 15,230 | Wet (24 hrs steam) | Inspected. Very dull (80Ra at EPS) uniform and blue/gray. |
| 14 | 436L | #4 | Yttria nanoparticles | 0.0459 | 44.15 | 6,560 | Wet (24 hrs steam) | Fairly uniform and blue/gray. |
| 15 | 436L | #4 | Yttria nanoparticles | 0.0459 | 44.15 | 11,535 | Wet (24 hrs steam) | Scallops compared to sister coil, 08AA |

**Table 2. Color measurements (SCI) for several panels produced using OCA processed stainless steel described in Table 1.**

| **Sample - Annealing Conditions** | **L*** | **a*** | **b*** | **SCI/SCE** |
|---|---|---|---|---|
| 0-436L-#4Polish-1 Cycle - Wet | 60.52 | 0.64 | 8.49 | SCI |
| 1-436L-#4Polish-1Cycle - Wet- '17 Thin ST | 51.65 | 1.82 | -0.79 | SCI |
| 2-436L-#4Polish-1Cycle - Wet- '17 Thick ST | 56.91 | -2.97 | -6.79 | SCI |
| 3-436L-2D-1 Cycle - Wet | 56.15 | -1.84 | 8.72 | SCI |
| 4-CS22-2B-1 Cycle Wet | 41.73 | 2.98 | 6.53 | SCI |
| 5-CS22-2B-2 Cycles - Wet | 39.89 | 0.91 | 1.66 | SCI |
| 6-CS22-#4Polish-1 Cycle - Dry | 39.87 | 1.23 | 2.69 | SCI |
| 7-CS22-4P-2 Cycle - Dry | 34.62 | -0.35 | -0.46 | SCI |
| 8-QUARTZ ZINC | 53.75 | -0.32 | 1.16 | SCI |
| 9-ANTHRA ZINC | 31.56 | 0.22 | 0.63 | SCI |
| a-CMR Walnut | 36.87 | 0.02 | 1.65 | SCI |
| b-VM Zinc - Pigmento Red | 48.42 | 5.00 | 6.12 | SCI |

**Table 3. Color measurements (SCE) for several panels produced using OCA processed stainless steel described in Table 1**

| Sample - Annealing Conditions | **L*** | **a*** | **b*** | **SCI/SCE** |
|---|---|---|---|---|
| 0-436L - #4Polish -1 Cycle -Wet | 56.12 | -0.83 | 4.86 | SCE |
| 1-436L-#4Polish-1Cycle - Wet-'17 Thin ST | 42.36 | 1.00 | -1.77 | SCE |
| 2-436L-#4Polish-1Cycle - Wet-'17 Thick ST | 45.71 | -1.43 | -7.33 | SCE |
| 3-436L-2D-1 Cycle - Wet | 53.98 | -2.8 | 6.63 | SCE |
| 4-CS22-2B-1 Cycle Wet | 31.39 | -1.34 | -3.68 | SCE |
| 5-CS22-2B-2 Cycles - Wet | 35.87 | -1.11 | -0.41 | SCE |
| 6-CS22-#4Polish-1 Cycle - Dry | 37.73 | 0.93 | 1.7 | SCE |
| 7-CS22-4P-2 Cycle - Dry | 33.63 | -0.59 | -1.13 | SCE |
| 8-QUARTZ ZINC | 53.52 | -0.3 | 1.12 | SCE |
| 9-ANTHRA ZINC | 30.76 | 0.22 | 0.53 | SCE |
| a-CMR Walnut | 35.03 | 0.04 | 1.41 | SCE |
| b-VM Zinc - Pigmento Red | 48.24 | 4.99 | 6.03 | SCE |

### Example 3

In addition to full coil trials, samples of various materials have been embedded within a coil to examine the effect of processing on appearance. Samples measuring 3x12 inch of several grades of stainless steel that were given various surface treatments were attached to the surface of a coil and then annealed. The results indicate that the surface appearance was affected by the grade of stainless steel and the surface treatment.

Stainless steel materials that were included were Type 409 with a 2B finish, Type 439 with a 2B finish, Type 430 with a #4 Polish finish, Type 444 with a #4 Polish finish, CHROMESHIELD 22 with a #4 Polish and CHROMESHIELD 22 with a 2B finish. The four panels in each series represent bare (no surface treatment), yttrium oxide coated, yttrium nitrate coated, and yttrium nitrate/citrate coated.

Note that the color of the surface treated samples is typically different than the bare material. In addition, the results for the yttrium oxide and yttrium nitrate treated samples are similar. Therefore, while most of the testing has been conducted using stainless steel surface treated with the yttria nanoparticle suspension, similar results are obtained by treating the samples with an aqueous solution containing less than 50% yttrium nitrate or preferably less than 5% yttrium nitrate. As in the surface treatment for the samples listed in Table 1, the amount of yttrium on the surfaces was 300 to 3000 µg/m² or more preferably 500-1000 µg/m^{2.} Similar results are expected if other rare earth oxide nanoparticles or microparticles, or nitrates of rare earth or near rare earth elements such as cerium, lanthanum or zirconium are used instead of yttrium.

### Example 4

Chromeshield 22 stainless steel samples processed according to the process of Example 1 were subjected to salt fog testing (ASTM B-117). The results are set forth in Table 7 below.

**Table 7**

| Material Information | | Time to Red rust | |
|---|---|---|---|
| Sample ID | Coil ID, surface finish, anneal condition, location | Top Side - Treated - Yttria nanoparticles | Back Side - Not Treated |
| 1 | 176628-01 #4 Dry Head | Heavy; 24 hours | Heavy, 24 hours |
| 2 | 176628-01 #4 Dry Middle | Light; 500 hours | Heavy; 24 hours |
| 3 | 176628-01 #4 Dry Tail | Very light; 500 hours | Heavy; 24 hours |
| 4 | 130508-01AB 2B Dry Head | Very light, localized; 500 hours | Heavy, isolated to top half of panel; 24 hours |
| 5 | 130508-01AB2B Dry Tail | Heavy, isolated to center of panel; 24 hours | Very light, localized; 500 hours |
| 6 | 130508-01AA 2B Wet Head | None; 500 hours | Very light, localized; 500 hours |
| 7 | 130508-01AA 2B Wet Tail | None; 500 hours | Very light, localized; 500 hours |

| | | | |
|---|---|---|---|
| Sample numbers 2, 3, 4, 6, 7 - Yttria sides were placed back into chamber for additional exposure time. | | | |

Table 7 indicates that the side of the stainless steel sheet that was treated with yttria nanoparticles typically had improved corrosion resistance when compared to the opposite untreated side of the same sheet. The exceptions (Sample ID 1 and 5) were due to non-uniform application of the surface treatment on these sheets.

## Claims

1. A process for modifying the surface of stainless steel strip comprising:
Coating a coil of stainless steel strip having two sides on at least one of said sides with at least one of an aqueous suspension comprising a rare earth oxide or an aqueous solution comprising a rare earth nitrate;
Subjecting said coated coil of stainless steel to an open coil anneal process at a temperature of about 537°C to about 982°C for about 1 hour to greater than 72 hours in one of a reducing or an oxidizing atmosphere and in one of a dry atmosphere with a dew point of -17°C or less or a wet atmosphere with a dew point of 15°C or more.

2. The process of claim 1, wherein the rare earth oxide comprises nanoparticles.

3. The process of claim 1, wherein the rare earth oxide comprises microparticles.

4. The process of claim 1, wherein the dewpoint is less than about -40°C.

5. The process of claim 1, wherein the open coil anneal process is performed in a wet atmosphere with a dewpoint of more than 26°C.

6. The process of claim 2, wherein the coating leaves a residue of a rare earth oxide in the range of about 300 to about 3000 µg/m².

7. The process of claim 6, wherein the residue of the rare earth oxide is in the range of 500 to about 1000 µg/m².

8. The process of claim 1, wherein, prior to subjecting the stainless strip to an open coil anneal process, at least one side of said stainless steel strip treated so as to impart to said side a surface finish selected from the group consisting of 2B, 2D, #4 Polish, ESD, and Greystone finishes.

9. The process of claim 2, wherein, prior to coating said stainless steel strip, at least one side of said stainless steel strip treated so as to impart to said side a surface finish selected from the group consisting of 2B, 2D, #4 Polish, ESD, and Greystone finishes.

## Patentansprüche

1. Verfahren zum Modifizieren der Oberfläche eines rostfreien Stahlbandes, umfassend:
Beschichten eines Coils aus rostfreiem Stahlband mit zwei Seiten auf mindestens einer der Seiten mit mindestens einer wässrigen Suspension, die ein Seltenerdoxid enthält, oder einer wässrigen Lösung, die ein Seltenerdnitrat enthält,
Unterziehen des beschichteten Coils aus rostfreiem Stahl einem offenen Coil-Glühverfahren bei einer Temperatur von etwa 537°C bis etwa 982°C für etwa 1 Stunde bis mehr als 72 Stunden in einer reduzierenden oder oxidierenden Atmosphäre und in einer trockenen Atmosphäre mit einem Taupunkt von -17°C oder weniger oder einer feuchten Atmosphäre mit einem Taupunkt von 15°C oder mehr.

2. Verfahren nach Anspruch 1, wobei das Seltenerdoxid Nanopartikel umfasst.

3. Verfahren nach Anspruch 1, wobei das Seltenerdoxid Mikropartikel umfasst.

4. Verfahren nach Anspruch 1, wobei der Taupunkt weniger als etwa -40°C beträgt.

5. Verfahren nach Anspruch 1, bei dem das Glühverfahren mit offener Spule in einer feuchten Atmosphäre mit einem Taupunkt von mehr als 26°C durchgeführt wird.

6. Verfahren nach Anspruch 2, wobei die Beschichtung einen Rückstand eines Seltenerdoxids im Bereich von etwa 300 bis etwa 3000 µg/m² hinterlässt.

7. Verfahren nach Anspruch 6, wobei der Rückstand des Seltenerdoxids im Bereich von 500 bis etwa 1000 µg/m² liegt.

8. Verfahren nach Anspruch 1, bei dem, bevor das rostfreie Band einem offenen Coil-Glühverfahren unterzogen wird, mindestens eine Seite des rostfreien Stahlbandes so behandelt wird, dass diese Seite eine Oberflächenbehandlung erhält, die aus der Gruppe ausgewählt wird, die aus 2B-, 2D-, #4-Polish-, ESD- und Greystone-Oberflächen besteht.

9. Verfahren nach Anspruch 2, bei dem vor dem Beschichten des rostfreien Stahlbandes mindestens eine Seite des rostfreien Stahlbandes so behandelt wird, dass diese Seite eine Oberflächenbeschaffenheit erhält, die aus der Gruppe ausgewählt wird, die aus 2B, 2D, #4 Polish, ESD und Greystone-Beschichtungen besteht.

## Revendications

1. Procédé pour modifier la surface d'une bande en acier inoxydable, comprenant :
le revêtement d'une bobine de bande en acier inoxydable ayant deux côtés, sur au moins l'un des desdits côtés, avec au moins l'une parmi une suspension aqueuse comprenant un oxyde de terres rares et une solution aqueuse comprenant un nitrate de terres rares ;
la soumission de ladite bobine en acier inoxydable revêtue à un traitement de recuit en bobine expansée à une température d'environ 537°C à environ 982°C pendant environ 1 heure à plus de 72 heures dans l'une parmi une atmosphère réductrice et une atmosphère oxydante et dans l'une parmi une atmosphère sèche ayant un point de rosée de -17°C ou moins et une atmosphère humide ayant un point de rosée de 15°C ou plus.

2. Procédé selon la revendication 1, dans lequel l'oxyde de terres rares comprend des nanoparticules.

3. Procédé selon la revendication 1, dans lequel l'oxyde de terres rares comprend des microparticules.

4. Procédé selon la revendication 1, dans lequel le point de rosée est inférieur à environ -40°C.

5. Procédé selon la revendication 1, dans lequel le traitement de recuit en bobine expansée est effectué dans une atmosphère humide avec un point de rosée supérieur à 26°C.

6. Procédé selon la revendication 2, dans lequel le revêtement laisse un résidu d'un oxyde de terres rares à raison d'environ 300 à environ 3000 µg/m².

7. Procédé selon la revendication 6, dans lequel le résidu de l'oxyde de terres rares est présent à raison de 500 à environ 1000 µg/m².

8. Procédé selon la revendication 1, dans lequel, avant la soumission de la bande en acier inoxydable à un traitement de recuit en bobine expansée, au moins un côté de ladite bande en acier inoxydable est traité de façon qu'il soit conféré audit côté un fini de surface choisi dans le groupe constitué par les finis 2B, 2D, #4 Polish, ESD, et Greystone.

9. Procédé selon la revendication 2, dans lequel, avant le revêtement de ladite bande en acier inoxydable, au moins un côté de ladite bande en acier inoxydable est traité de façon qu'il soit conféré audit côté un fini de surface choisi dans le groupe constitué par les finis 2B, 2D, #4 Polish, ESD, et Greystone.
